# EUROPEAN PATENT APPLICATION

(11) **EP 2 671 856 A1**
(43) Date of publication of application: **11.12.2013**
(21) Application number: 13169848.2
(22) Date of filing: 30.05.2013
(51) Int. Cl.: C04B 38/00, A01K 1/015

(54) **Method and plant for producing an adsorbing granular material from waste, and an absorbing granule**

(30) Priority: 04.06.2012 IT MI20120964
(71) Applicant: Gabba, Maria Rosa, 27020 Dorno (PV) (IT)
(72) Inventor: GENNARI, Fabio, I-27020 Dorno, PAVIA (IT)
(74) Representative: Mozzi, Matteo

(57) **Abstract**

The invention relates to a method for producing, from a waste comprising plasterboard elements (3, 4), an adsorbing granular material (7) containing at least 70% dihydrate calcium sulfate, comprising the steps of selecting (202) a fraction (4) of said plasterboard elements (314) formed by granules (6) having a diameter ranging between a preset minimum value and a preset maximum value; drying (203) said fraction (4) or said plasterboard elements (3, 4) at a preset temperature not exceeding 70 °C. Furthermore, the invention relates to a plant for producing (1), from a waste comprising plasterboard elements (3, 4), an adsorbing granular material (7) containing at least 70% dihydrate calcium sulfate, comprising sieving means (30) suitable to separate a fraction (4) of said plasterboard elements (3, 4) formed by granules having a diameter ranging between a preset minimum value and a preset maximum value, drying means (50) of said fraction (4) or of said plasterboard elements (314) at a preset temperature not exceeding 70 °C. Furthermore, the invention relates to an absorbing granule (300, 7, 9, 19, 29) comprising a core (303) which is formed by a fragment of waste of plasterboard panel, containing at least 70% of dihydrate calcium sulfate, said core having a diameter ranging between a preset minimum value and a preset maximum value.

## Description

The present invention relates to a method and to a plant for producing gypsum-based absorbing granules, particularly gypsum obtained from waste, capable of being used as an animal litter or for absorbing a liquid spilled on a surface, which is easily removable after use.

Calcium sulfate, or gypsum, occurs naturally in large amounts, and it originates mainly from evaporitic rocks. When the gypsum is crystallized with two water molecules, thus being dihydrate, it is referred to as "selenite" from a mineralogical viewpoint, while when is crystallized without water molecules, thus being anhydrous, it is referred to as "anhydrite" from a mineralogical viewpoint.

The dihydrate calcium sulfate, for example the one coming from a mine, when it is subjected to heating at preset temperatures, it releases part of the crystallization water to such an extent as to form partially hydrated gypsum, for example, hemihydrate gypsum, in which there are 0.5 moles of water per one mole of calcium sulfate.

The method for subtracting water molecules from the crystalline structure of the calcium sulfate is typically referred to as "calcination".

According to the calcination temperature, i.e., the temperature at which the gypsum is treated to remove the water molecules from its crystalline structure, gypsums are obtained with different hygroscopicity degrees, and this characteristic is annulled when the temperature exceeds 400 °C.

The water molecules chemically hold in the crystalline structure of the gypsum will be indicated as "crystallization water".

The crystallization water plays a crucial role, since it influences the "curing" phenomenon, which is the hardening that occurs by adding free water to the partially dihydrate gypsum.

In fact, the hemihydrate gypsums react with the free water generating the dihydrate form quite quickly, and creating an aggregation of chaotically intertwined crystals that form solid objects.

Some plants for recycling some waste of building material, for example, plasterboard panels, are known.

The gypsum powder, before the addition of water, is in the form of hemihydrate calcium sulfate. With the addition of water, on the other hand, the calcium sulfate becomes dihydrate, giving rise to the solidification process, thus forming a solid mass.

A process for recycling the plasterboard panels is known, which aims to obtain hemihydrate gypsum powder from already solidified plasterboard panels formed by dihydrate gypsum. The thus-obtained hemihydrate gypsum powder is thus suitable to be kneaded again with water and to give rise to a dihydrate gypsum for a new solidification, allowing to obtain new products.

Such a known method has the drawback to require a number of processing and step of treatment of the materials starting from the material to be recycled formed by plasterboard panels, until obtaining hemihydrate gypsum powder.

Particularly, the removal of the water molecules to obtain the hemihydrate form requires prolonged and expensive thermal and mechanical treatments.

Sometimes, the gypsum powder produced by the above-mentioned known method can be subsequently agglomerated and kneaded with other components in order to obtain different materials, for example, granules for different uses.

Therefore, the product thus obtained through the known method, for example, the above-mentioned granules, requires a first set of operative steps to bring the gypsum from the dihydrate form back to the hemihydrate form, and a second set of operative steps to obtain the new solidified product in dihydrate form starting from the powder in the hemihydrate form previously obtained.

This double step from the dihydrate to the hemihydrate form, then again to the dihydrate form involves considerable costs for producing the recycled end product, which costs are certainly higher than those of the product obtained directly starting from the not-recycled gypsum

Therefore, such end product, obtained from waste of plasterboard panels to be disposed of, involves the important drawback of being particularly industrious and expensive.

The granular material from gypsum from waste, for the purpose of its function as an absorbing material for absorbing a liquid for example spilled on a surface or contained in an animal ejections in a litter, has to avoid the formation of solid agglomerates when it is in contact with these liquids.

If this material were not in the dihydrate form, but in the hemihydrate or anhydrous form, it could not perform its function as an absorbing material for a liquid spilled on a surface, and it is not could it be used as an animal litter.

In fact, if a gypsum in the non-dihydrate crystalline form was used to absorb liquid or oily substances spilled on a road surface or on an industrial floor, it would quickly solidify, adhering to the same road surface or floor, forming a hard crust that would be impossible or very difficult to remove.

Therefore, a hemihydrate or anhydrous gypsum would not be suitable at all for use as an absorbing material for absorbing and removing water, oil, hydrocarbons, or a general liquid spilled on a surface, since it could not be removed after its application.

Furthermore, a hemihydrate or anhydrous gypsum would not be suitable neither to be used as an absorbing material for an animal litter, due to the same reason described above. In fact, such material would quickly react with the liquids contained in the animal waste, thus hardening and forming very hard agglomerates of dihydrate gypsum adhered to the litter container, or even worse, to the fur or the skin of the animal using the litter. Furthermore, the hard agglomerates that are formed in the litter could cause injuries by cutting or abrasion on the animal limbs or other parts of the animal body. Therefore, the effects could be quite severe. In this case, also, it would be very difficult or impossible to remove such hard agglomerates of dihydrate gypsum from the container after its use.

Therefore, it is very important, that the adsorbing granular material is dihydrate gypsum, and not hemihydrate gypsum or anhydrous gypsum, so that is has not an intrinsic inclination to harden in contact with liquids, for example, containing water.

Therefore, the need is felt, to provide a method for obtaining an adsorbing granular material based on dihydrate calcium sulfate with preset chemical-physical characteristics and ready-to-use, starting from waste comprising elements of plasterboard panels, in which such material is obtained directly from such waste, avoiding the intermediate conversion from dihydrate calcium sulfate to hemihydrate calcium sulfate.

An object of the present invention is to obtain an absorbing material comprising dihydrate calcium sulfate suitable to absorb and hold a liquid spilled on a surface, for example on a road surface, and to be easily removable after use without leaving traces, avoiding to chemically react with the liquid and avoiding to form solid agglomerates or incrustations on a treatment or containment surface.

Another object of the present invention is to obtain an absorbing material comprising dihydrate calcium sulfate suitable to form an animal litter capable of absorbing and holding waste produced by such animals, avoiding to react with the liquid to form solid agglomerates or incrustations on the surface of a container of the litter. Another object of the present invention is to obtain a adsorbing granular material based on dihydrate calcium sulfate from waste comprising elements of plasterboard panels, avoiding further intermediate pulverization steps.

A further object of the present invention is to provide a production plant capable of obtaining such adsorbing granular material based on dihydrate calcium sulfate with preset chemical-physical properties and ready-to-use directly starting from waste comprising elements of plasterboard panels.

It is still an object of the present invention to provide an adsorbing granular material obtained from waste of plasterboard, containing at least 70% calcium sulfate and that is inexpensive and rapid to be manufactured.

A further object of the present invention is to provide an adsorbing granular material that is non-toxic and anti-bacterial.

Another object of the present invention is to provide an inert, odorless adsorbing granular material.

Further object of the present invention is to provide a adsorbing granular material for litters for pets, being particularly anti-odor, anti-bacterial, anti-dust.

Another object of the present invention is to provide a adsorbing granular material the production of which concurs to the respect and protection of the environment, being it obtained from waste.

These and further objects and advantages are achieved by a method for producing, from a waste comprising elements of plasterboard, a adsorbing granular material, as described in claim 1.

According to another aspect of the invention, the above-mentioned and other objects and advantages are achieved by a production plant to obtain an adsorbing granular material from waste comprising elements of plasterboard panels.

According to a further aspect of the invention, the above-mentioned objects and advantages are achieved by a adsorbing granular material for litters for pets, containing at least 80% of dihydrate gypsum, obtained from waste comprising elements of plasterboard panels.

Further objects, solutions, and advantages are present in the embodiments described herein below and claimed in the depended claims, appended herein below.

A number of embodiments of the invention shall be now described herein below by means of implementation examples, given by way of illustrative and non-limiting example only, with reference in particular to the appended figures, in which:

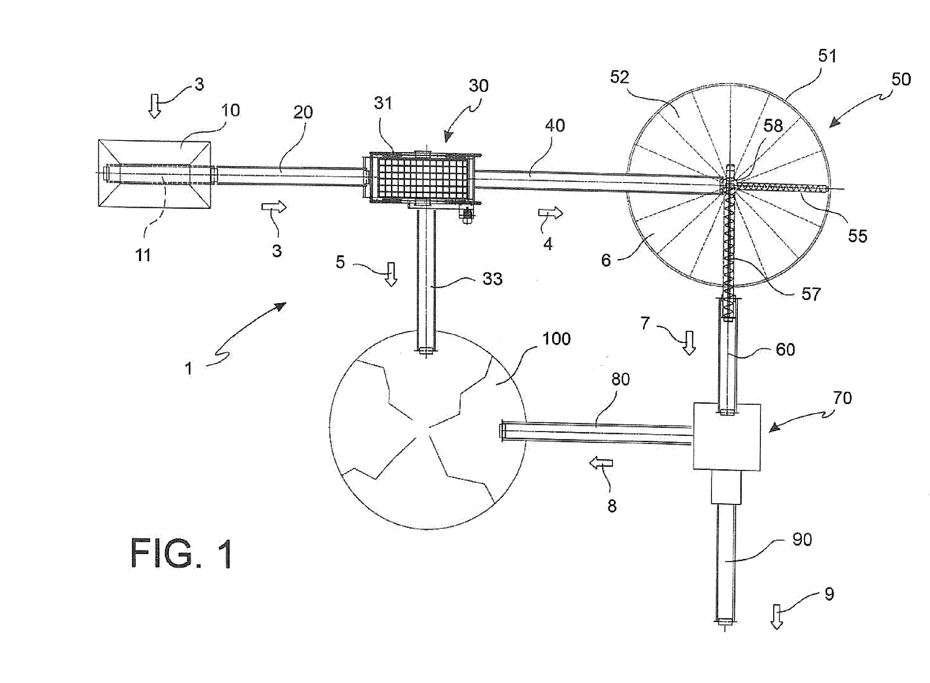

- Fig. 1 shows a production plant to obtain a adsorbing granular material containing at least 70% gypsum, from waste formed by plasterboard panels, according to the present invention;

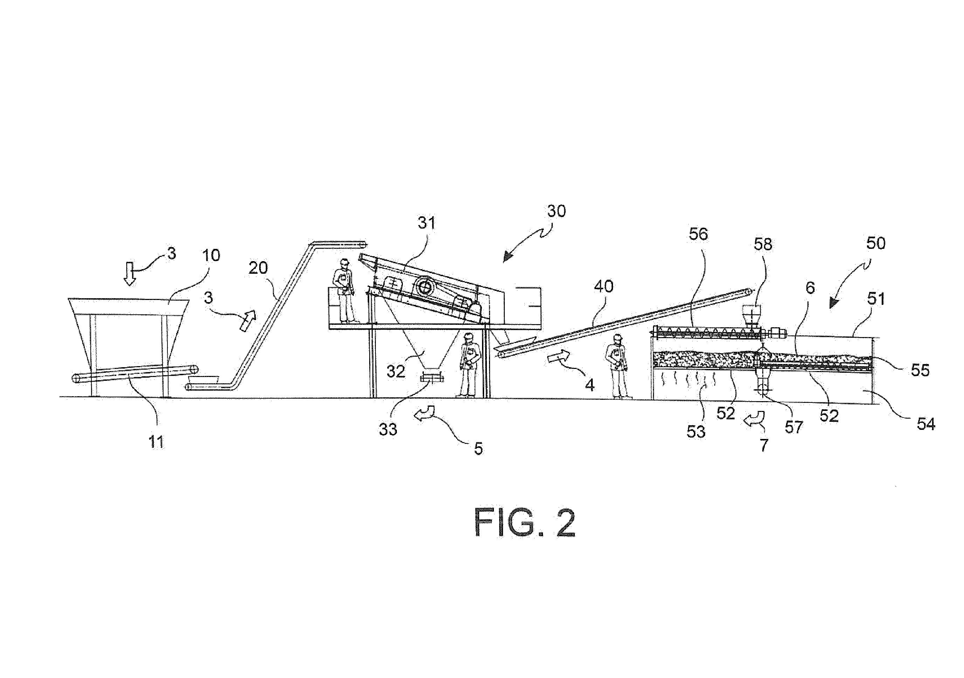

- Fig. 2 shows a portion of such plant suitable to select granules having preset dimensions and to dry them;

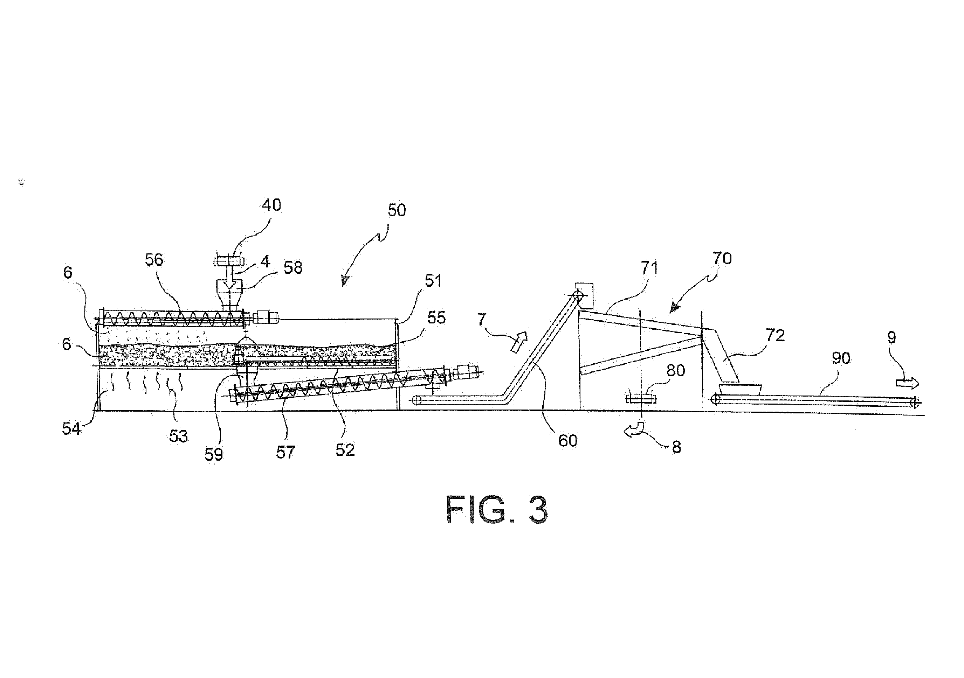

- Fig. 3 shows a subsequent portion of the plant, suitable to separate the dried granules from impurities having a specific density different from that of gypsum;

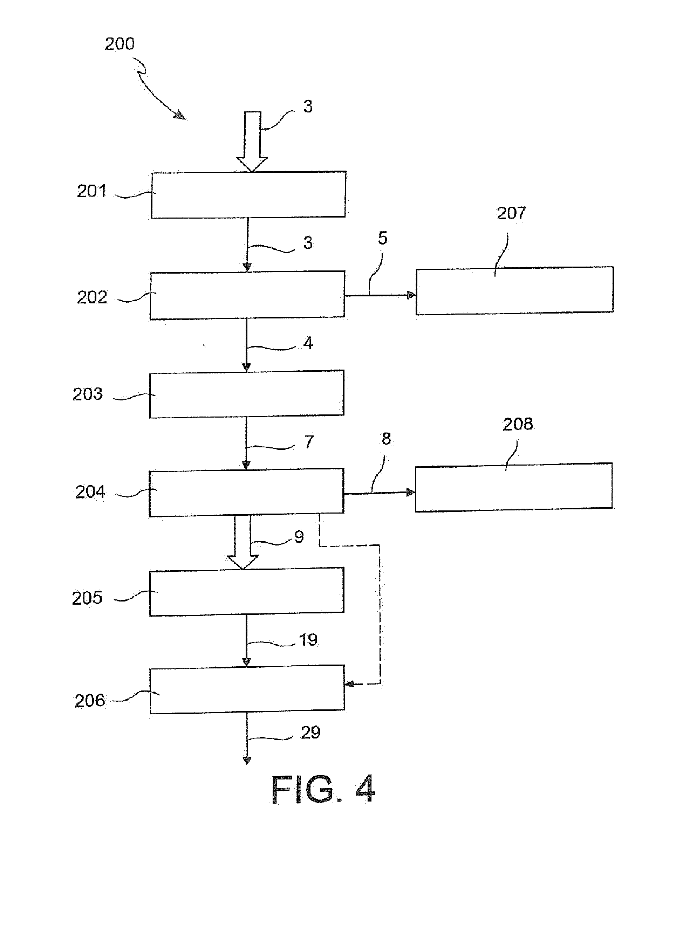

- Fig. 4 shows a block diagram describing the method according to the invention;

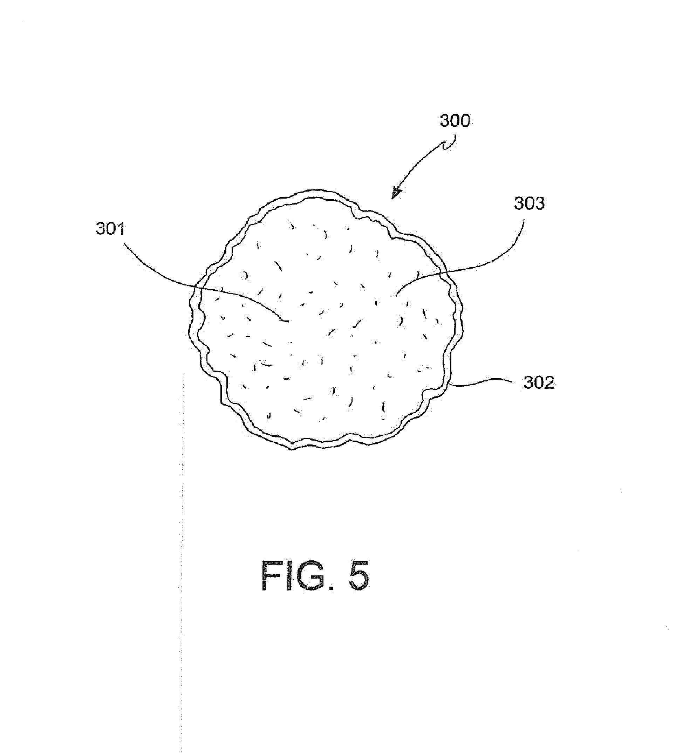

- Fig. 5 shows a cross-section of an absorbing granule according to the invention.

With reference to the figures, a method for obtaining a adsorbing granular material starting from plasterboard panels is generally indicated with the numeral 200.

Said method allows obtaining, from disused plasterboard panels and to be disposed of, a granular material having a high ability of absorbing liquids.

The adsorbing granular material obtained contains at least 70% dihydrate calcium sulfate.

The method comprises a first step of selecting (202) a fraction 4 of said elements of plasterboard 3, formed by granules having a diameter ranging between a preset minimum value and a preset maximum value.

The method further comprises a step of drying (203) said fraction 4 or said elements of plasterboard 3, 4 at a preset temperature not exceeding 70 °C, for example, but not necessarily ranging between 50 °C and 70 °C. For a temperature below 70 °C, the crystalline structure of the calcium sulfate is not changed, in fact, for temperature values above 70 °C, the calcium sulfate passes from the dihydrate form to the hemihydrate form, bringing it back to conditions that are similar to those before the solidification. In the present invention, it is desired to avoid this crystalline change.

Temperatures below 50 °C, beside to avoiding the separation of the water molecules from the crystalline structure of the dihydrate gypsum, also allow saving the energy needed for the heating.

In accordance with an embodiment, said preset temperature below 70 °C has to be maintained for a preset time, that is adjusted to reduce the humidity of the granules up to a preset value of residual humidity of the granules.

Said preset value of residual humidity ranges for example between 5% and 10%, particularly between 5% and 7%.

For example, but not necessarily, said preset time is more than 20 minutes, for example more than 50 minutes, for example between 40 and 80 minutes.

The above-mentioned method provides that said preset minimum value substantially ranges between 0.5 µm and 2 mm, and said maximum value substantially ranges between 4 and 7 mm.

For example, but not necessarily, said maximum value is substantially equal to 6 mm.

For example, but not necessarily, said minimum value substantially ranges between 1 and 2 mm, preferably substantially equal to 2 mm.

According to an embodiment, the preset minimum value is about 3 mm and the preset maximum value is about 8 mm.

According to another embodiment, the preset minimum value is 1 mm and the preset maximum value is 3 mm.

According to an embodiment, the method may comprise, before the selecting (202) or drying (203) step, a previous step of crushing (201) the plasterboard panels so as to obtain the elements in plasterboard 3.

The method may also comprise a further step of sieving of the material produced by said previous crushing step (201).

Therefore, the plasterboard elements 3 may be the result of a previous milling and sieving and are formed by fragments of gypsum and also of paper or other materials with different specific densities with dimensions ranging between those of the powders and the above-mentioned maximum value.

In other words, the plasterboard elements 3 could be formed by particles having a diameter that is less than 3 mm, namely they may comprise a mix of particles the dimensions of which range between those of the powder to those of the granules.

The plasterboard elements 3 can for example be supplied in inlet to the plant 1 through a conveying hopper 10 receiving in inlet the plasterboard elements 3 and distributing them in outlet according to a preset flow rate that can be adjusted and suitable to the successive processing steps.

A transporting step may be provided, by means of first transport means 20, for example through a conveyor belt from the hopper 10 to the following processing station 30.

The above-mentioned separation step (202) separates the powders 5 from the granules 4, for example, it subtracts from the first material 2 the particles 5 having dimensions below the above-mentioned minimum value, leaving instead the particles 4 having larger dimensions in the processing circuit of the plant 1.

The above-mentioned particles with lower dimensions are preferably sent (207) to an accumulation zone 100 to be then disposed of or intended to other uses.

Therefore, in the production process, those granules 4 remain, having dimensions ranging between said minimum value and said maximum value, without the particles with lower dimensions.

The separation step 202 may be obtained by means of a vibrating screen 30 having at least one grid 31 with a preset sieving pitch. The at least one grid may be inclined to promote this operation. Below the grid 31 a conveying cone 32 may be present, which leads to a conveyor belt transporting the powders 5 towards the accumulation zone 100.

According to an embodiment, the step of drying (203) is carried out after the separation step (202).

According to another embodiment, the step of drying 203 is carried out before the separation step (202).

In accordance with an embodiment, the step of drying (203) comprises a step of insufflating a flow of hot air 53 through a layer of granules comprising said fraction 4 or from said elements of plasterboard 3, 4. In such a manner, the flow of hot air hits and skims the granules and heats them by convection. In such a manner, the flow of hot air removes by convection the humidity that is present in the granules.

According to an embodiment, the step of drying (203) is of a static type. In such a manner it is avoided that new powder is formed from the fraction 4 of plasterboard elements.

In accordance with an embodiment, the step of drying (203) comprises a step of insufflating hot air 53 so that said hot air 53 passes through 52 and skims a layer of said fraction 4 or of said plasterboard elements 3, 4, so as to dry said fraction 4 or said plasterboard elements 3, 4 at said preset temperature and to obtain a dried granular material 7.

In the case of a static drying, the step of drying (203) preferably comprises, but not necessarily a step of depositing a layer of said fraction 4 or of said plasterboard elements 3, 4 onto the bottom of a drying tank 51 suitable to hold above it said fraction 4 or said plasterboard elements 3, 4 and defining below it a heating chamber 54.

Particularly, the bottom 52 of the tank comprises a mesh so as to allow the passage of hot air 53, being preferably arranged in a substantially horizontal manner.

According to an embodiment, the step of insufflating hot air 53 is carried out in a direction going from the heating chamber 54 upwardly, particularly from the bottom upwardly.

Such step of drying (203) occurs making so that a flow of hot air 53 passes through a layer of the fraction 4 of plasterboard elements or the plasterboard elements 3, 4 deposited in a containment tank 51 of a drier 50. Particularly the drier 50 may comprise a cylindrical tank with a substantially horizontal bottom overlaying a lower heating chamber 54 and separated therefrom by a horizontal mesh 52. Hot air 53 is insufflated into the heating chamber, which hot air is forced to pass through the fraction 4 of plasterboard elements or the plasterboard elements 3, 4.

The fraction 4 of plasterboard elements or the plasterboard elements 3, 4 may be evenly distributed in the tank 51 through a first screw conveyor 56, arranged above the tank and rotating about the axis thereof and on a horizontal plane about a free end thereof, particularly about the axis of the cylindrical tank 51.

The drier 50 may also comprise a second screw conveyor 55 rotating about a rotational axis thereof and about a free end thereof along the bottom 52 of the tank within the tank 51, suitable to withdraw continuously the fraction 4 of plasterboard elements or the plasterboard elements 3, 4 from the bottom of the tank 51 to convey it towards an outlet duct 59. Also the second screw conveyor 55 may be arranged so as to rotate about an end thereof about the axis of the cylindrical tank 51.

The method provides a step of transporting the granules formed by the fraction of elements of plasterboard 4, from the screen 30 to the drier 50, through second transport means, for example, a second conveyor belt 40.

The outlet duct 59 of the tank 51 of the drier 50 faces third transport means 57, suitable to transport the dried adsorbing granular material 7 towards a successive processing station 70.

such transport means may comprise, for example, a third screw conveyor 57 rotating about a rotational axis thereof and mounted with the axis in a fixed position having a first end at the outlet duct 59 and a second end at successive transport means 60 or the next station 70.

In accordance with an alternative embodiment, the step of drying (203) is of a dynamic type, for example, said step is carried out together with a handling of the granules formed by said fraction 4 or by said plasterboard elements 3, 4. For example, the step of drying (203) is obtained through a rotary drier. For example, the step of drying (203) is obtained during a step of sieving the granules formed by said fraction 4 or by said plasterboard elements 3, 4.

In an embodiment, means for removing further powder that could have been formed from the fraction 4 of plasterboard elements or the plasterboard elements 3, 4 may be provided.

In accordance with an embodiment, the method comprises a step of pre-drying to reduce the humidity of said fraction 4 or said plasterboard elements 3, 4, to an optimal value of inlet humidity ranging between 15% and 18%, said step of pre-drying being preferably carried out before said step of drying 203.

Such pre-step of drying may be carried out, for example, by storing the material in a closed warehouse, so as to obtain a natural drying. In such a manner, the granular material, before being introduced in the drying oven, is brought to the above-mentioned optimal value of inlet humidity, which represents a good starting point for the next steps.

According to an embodiment, the method according to the invention comprises a further step of cleaning 204 the dried adsorbing granular material 7 suitable to remove from said granular material 7, residues 8 of paper and other materials at a specific density less than that of the gypsum, making said granular material 7 to precipitate in a well 72 and at the same time creating a suction flow upwardly in said well 72, thus obtaining a clean adsorbing granular material 9.

In other words, the granular material, having a higher specific density, tends to fall down into the well, while the particles with a lower specific density are suctioned from the upwardly air flow passing through the well. In such a manner, when the granular material 9 exits the well, it is substantially free from paper particles initially present in the initial plasterboard panels.

The step of cleaning 204 may be combined with a further step of sieving that precedes it, so as to separate from the dried granular material 7 possible other granules with a diameter less than the above-mentioned minimum value, for example, powder that could have been formed during the step of drying 204.

Such further step of sieving may be carried out through an oscillating sieve 71, which selects the granules in a finer manner compared to a vibrating screen, to avoid a further crushing.

The powders and the granules 8 with diameter less than the minimum value are then conveyed towards the accumulation zone through further transport means, for example a further conveyor belt 80.

Exiting from the step of cleaning 204, and then exiting from the cleaning device 70, the adsorbing granular material 9, optionally transported by a further conveyor belt 90, turns out to be formed by substantially homogeneous granules, substantially free from impurities and powders and dried, thus having a porosity high enough to confer a high absorbing power.

The granular material thus obtained is in the form of selected granules formed by at least 70% gypsum and, by virtue of the step of drying, it has a high ability of absorbing liquids, thus it may be used as an absorbing material.

The producing method according to the invention prevents the granular material to be subjected to a step of compression or to a step of compacting the material itself. In such a manner, the microporosity of the gypsum contained in the initial waste material remains unaltered. As a matter of fact, such porosity, is very important in that it allows a higher absorption of liquids. An additional compression or compacting step of the material at a high pressure, for example, to form pellets, would reduce the porosity of the material, and therefore it is to be avoided.

According to the invention, further steps of treatment of such granules 6, 7, 9 may be provided, in order to confer specific properties thereto. For example, in order to make them more stable upon time against the formation of powders, and highly inert with respect to the formation of bacteria and malodors, thus making them suitable for use as an animal litter, for example for pets, for example, for cats.

According to an embodiment of the invention, in fact, a step of flushing 205 of the granules 7 or 9 is provided, with a first treating means comprising a second component that remains embedded in the adsorbing granular material 7 or 9, said second component being suitable to confer to the granular material the ability of being substantially inert to the settling of bacteria and to stifle malodors.

The first treating means may also comprise a first volatile component that evaporates after being flushed. In such a manner, a treated granular material 19 is obtained.

A further step of coating (206) of said adsorbing granular material 7, 9 or 19 may be also provided, with a second treatment liquid suitable to form a protective film wrapping each single granule of the adsorbing granular material, to prevent the successive separation of powder from such material. In such a manner, a coated adsorbing granular material 29 is obtained.

The step of coating (206) may be carried out, for example, but not necessarily, after the step of flushing (205).

Analyses and technical tests provided optimal experimental results in terms of the quality of the granular product thus obtained by means of the above-mentioned method, by using specific values of the parameters of inlet humidity, treatment temperature and treatment time as set forth in the following examples.

According to a first example, both in the case of a adsorbing granular material for litter and of an absorbing material for absorbing a liquid spilled on a surface, the granular material was inserted in the drying oven while being already crushed, at an inlet humidity equal to about 18%. The crushed material was arranged in the drying oven and held at a temperature of about 70 °C for a time of about 25 min. The set of these specific parameters led to the obtainment of stable granules of dihydrate gypsum, with high porosity and high ability of absorbing liquids.

In accordance with a second example, the granular material was inserted in the drying oven already crushed, at an inlet humidity equal to about 15%. The crushed material was arranged in the drying oven and held at a temperature of about 50 °C for a time of about 30 min. Also in this case, the set of these specific parameters led to the obtainment of stable granules of dihydrate gypsum, with high porosity and high ability of absorbing liquids.

More generally, it has been noticed that if the granular material is inserted in the drying oven at an inlet humidity ranging between 15% and the 18%, and held at a temperature of about 50 °C for a time ranging between 20 and 30 minutes, a granular material in dihydrate gypsum is obtained, which is substantially free from hemihydrate or anhydrous gypsum, at a residual humidity ranging between 5% and 7%. Such product, under the chemical-physical conditions achieved, has an excellent absorbing ability, it is stable, it does not require too stringent storing conditions, and it is ready-to-use. Such product does not chemically react with water, therefore it does not solidify into agglomerates, but it is capable of absorbing water, or other liquids, in a huge amount, by receiving them by capillarity into the interspaces initially present in the gypsum and kept open and clean by virtue of the method according to the invention.

Excellent results were obtained even if the granular material is inserted in the oven at an inlet humidity ranging between 15% and 18% and heated at a temperature below 50 °C, for a time ranging between 40 and 80 minutes.

According to another aspect of the present invention, the above-mentioned objects and advantages are achieved by a production plant 1 for producing, from a waste comprising plasterboard elements 3, 4, an adsorbing granular material 7 containing at least 70% dihydrate calcium sulfate.

The above-mentioned production plant is configured to implement the above-mentioned method.

The above-mentioned plant may comprise sieving means 30 suitable to separate a fraction 4 of said plasterboard elements 3, 4 formed by granules having a diameter ranging between a preset minimum value and a preset maximum value.

Furthermore, the above-mentioned plant may comprise drying means 50 of said fraction 4 or of said plasterboard elements 3,4 at a preset temperature not exceeding 70 °C.

Particularly, said fraction 4 of said plasterboard elements 3,4 has a preset minimum value ranging substantially between 0.5 µm and 2 mm and said maximum value substantially ranges between 4 and 7 mm.

Such a plant is generally indicated with the reference 1.

The production plant 1 to obtain adsorbing granular material 7, 9, 19, 29 from waste formed by plasterboard panels comprises supplying means 10 suitable to provide a flow rate of said elements of panels 3,4 formed by fragments of plasterboard panels.

Such supplying means may comprise, for example, a distributing hopper 10, suitable to provide in inlet to the production plant 1 a controlled flow rate of said plasterboard elements 3,4.

The production plant 1 further comprises a vibrating screen 30 suitable to separate from said plasterboard elements 3,4 a fraction 4 of elements having a diameter ranging between the above-mentioned preset minimum value and the above-mentioned preset maximum value.

According to an embodiment, the production plant 1 comprises transport means, particularly a continuous transport, between the supplying means 10 and the vibrating screen, such means comprising, for example, a conveyor belt 20.

The vibrating screen 30 comprises at least one grid 31 suitable to select the granules 4 having a particle size ranging between the minimum value and the maximum value, and to separate them from the powders and from the granules with a different particle size.

Therefore, the vibrating screen may comprise a conveying funnel 32 of the powders arranged below the at least one grid 31.

Therefore, the production plant 1 may comprise continuous transfer means 33 of the powders and granules 5 with a particle size less than the above-mentioned minimum value from the vibrating screen up to an accumulation zone 100. For example, such continuous transfer means may comprise a conveyor belt 33.

Said drying means may comprise a static drier 50 comprising a containment tank 51 suitable to hold said second material 6 to be dried, and suitable to be passed through by a flow of hot air 53, thus obtaining said dried adsorbing granular material 7.

The drier is configured to heat the granules at a preset temperature not exceeding 70 °C, for example, but not necessarily, ranging between 50 °C and 70 °C.

According to an embodiment, the drier is configured to keep the fraction 4 of plasterboard elements or the plasterboard elements at the above-mentioned temperature for a preset time, particularly more than 20 minutes, for example more than 50 minutes, for example between 40 and 80 minutes. Such treatment duration led to the obtainment of excellent results relative to the ability of absorbing liquids.

According to an embodiment, the production plant 1 comprises second continuous transport means 40 suitable to transport the fraction 4 of plasterboard elements formed from the granules previously selected from the vibrating screen 30, from the vibrating screen up to the static drier 50, and having a diameter ranging between the above-mentioned minimum value and the above-mentioned maximum value. Such second transport means may comprise, for example, a second conveyor belt 40.

According to a possible embodiment, the containment tank 51 of the static drier 50 is overlapped at a lower heating chamber 54 separated from the tank 51 by means of a mesh 52, in said lower chamber 54 hot air 53 being insufflated, which is suitable to pass through the mesh 52 and the granular material 6. The containment tank 51 is preferably cylindrical with a horizontal base, defining an axis of the cylindrical tank.

The static drier 50 comprises, for example, a first dispensing screw conveyor 56 rotating about an end thereof along a horizontal plane above the tank 51, suitable to homogeneously distribute said fraction of plasterboard elements 4 starting from an inlet hopper 58 up to inside the tank 51. In other words the screw conveyor 56 receive the fraction 4 of plasterboard elements, coming from the transfer means 40, to an end thereof arranged at the inlet hopper 58. The screw conveyor 56 is arranged substantially horizontally, in other words, it is arranged with the axis thereof substantially horizontally, and by rotating about such rotational axis thereof, it transfers the granules along in the direction of such axis thereof towards the opposite end of the screw conveyor. The screw conveyor 56 is contained within a tube having an opening along a lower line thereof, which allows the granules to go out along such line. Together with the screw conveyor 58, it rotates about the axis of the cylindrical tank, distributing in such manner the granules in the tank in a substantially homogeneous manner to form a layer of granules having a substantially even thickness.

The drier 50 preferably comprises a second screw conveyor 55 rotating about an end thereof along the bottom 52 of the tank within the tank 51, suitable to continuously withdraw the dried granular material 6 from the bottom of the tank 51 to convey it towards an outlet duct 59. Also the second screw conveyor 55, in addition to rotate about the axis of the tank, also rotates about its own axis to sweep the bottom of the tank 51.

Then the second screw conveyor 55 transfers the dried granules towards the center of the tank 51, at which an outlet hopper 59 is present, conveying the granules towards following transport means 60, for example, a successive conveyor belt 60.

In an embodiment, a third screw conveyor 57 is present, interposed between the outlet hopper 59 and the successive transport means 60.

In accordance with an embodiment, the plant 1 comprising a cleaning device 70 suitable to remove, from said dried granular material 7, residues 8 of paper and other materials with a specific density that is less than that of the gypsum, said cleaning device 70 comprising a well 72 in which the granular material 7 to be cleaned is precipitated, and a suctioning fan suitable to create a suctioning flow upwardly in said well 72, suitable to suction said residues 8.

The cleaning device 70 may comprise an oscillating sieve 71 upstream of the well 72, suitable to separate from the granules 7 already selected and dried a possible further powder or granules 8 having a particle size that is lower than the minimum size, formed in the previous steps.

The cleaning device brings the removed material 8 through the oscillating sieve 71 towards further transport means 80, for example comprising a further conveyor belt 80.

Such further transport means 80 lead preferably to the accumulation zone 100. The material built-up in such zone will be disposed, or led to further processing operations.

According to an embodiment, the above-mentioned preset minimum value of the granules is substantially equal to 2 mm, and said preset maximum value of the granules is substantially equal to 6 mm.

The granular material 9, 19, 29 obtained through the method or the plant according to the invention contains a minimum percentage of gypsum substantially equal to 70% by weight.

According to another aspect of the invention, the above-mentioned objects and advantages are met by means of an adsorbing granular material, for example, but not necessarily, for litters for pets, containing at least 70% gypsum obtained from waste formed by plasterboard panels.

The above-mentioned absorbing material is formed by a plurality of granules, in which each granule 300, 7, 9, 19, 29 comprises a core (303) formed by a fragment of waste of plasterboard panel, containing at least 70% gypsum or calcium sulfate, for example, said core being dried for a preset time and at a preset temperature to increase its absorbing power.

In other words, said absorbing granule 300, 7, 9, 19, 29 comprises a core 303, which is formed by a fragment of waste of plasterboard panel, containing at least 70% dihydrate calcium sulfate, said core having a diameter ranging between a preset minimum value of 0.5 µm and a maximum value of 7 mm, preferably between 2 and 6, said core being dried at a preset temperature W substantially not exceeding 70 °C.

For example, but not necessarily, said core 303 of said absorbing granule 300, 7, 9, 19, 29, has a residual humidity ranging between 5% and 10%, for example between 5% and 7%.

According to an embodiment, the above-mentioned absorbing granule 300, 7, 9, 19, 29, is obtained by means of the above-mentioned method.

According to an embodiment, the above-mentioned absorbing granule 300, 7, 9, 19, 29, is obtained by means of the above-mentioned plant.

According to an embodiment, the core 303 of the granule comprises, in particular, but not necessarily for litters for pets, a disinfecting and antibacterial and/or anti-odour substance 301 diffused throughout its volume.

Particularly, the core 303 may comprise an outer anti-dust coating 302.

According to another aspect of the present invention, the above-mentioned objects and advantages are achieved by using said granule, as a material absorbing a liquid.

The above-mentioned objects and advantages are obtained by a plurality of said granules, used as a material absorbing a liquid.

In particular, said liquid is a fuel spilled or collected on a surface. The granules according to the invention are particularly suitable, because they do not burn in the case of a fire and therefore, they do not fuel the fire itself.

For example, said liquid is an organic liquid produced by an animal, for example, a cat. In fact, the granules according to the invention are non-toxic and odorless, therefore they hinder the formation of pathogens.

For example, said liquid is an acid or basic liquid. In fact, the granules according to the invention are inert, thus they do not chemically react.

For example, said liquid is an oily liquid, for example, oil. In fact, the granules according to the invention have the effect of not releasing the absorbed liquid.

The method and the plant according to the present invention involve the following important advantages.

The provision that the granular material produced is dihydrate calcium sulfate involves the advantage that such material does not react chemically with the water or the liquid to be absorbed, thus it avoids to chemically bind further water molecules in its own crystalline structure, thus it avoids hard agglomerates or incrustations from being formed by solidification, limiting itself to physically absorb the liquid into the micro-cavities formed by the granule porosity.

Therefore, an important advantage of the above-mentioned material is given by the fact that it is easily removable after use without leaving traces on the treated surface, avoiding to adhere to the surface and avoiding the formation of incrustations.

This aspect allows using the above-mentioned granular material in a complete safe manner also for absorbing a liquid, for example oil or hydrocarbons on a road surface, leaving the road surface clean and free from incrustations. On the contrary, if the granular material was of hemihydrate or anhydrous gypsum, it would form hard incrustations strongly adhered to the road surface and difficultly removable.

An important advantage is given by the fact that the method and plant according to the invention allows obtaining a highly porous and absorbing gypsum-based granular material of high quality, directly from waste of disused plasterboard panels, without having to preventively pulverize the gypsum to then knead it.

This involves the important advantage that the manufacturing process of the granules is particularly inexpensive, since the same granules are obtained directly from the fragments of the panels and the granular material obtained is formed only by such fragments suitable selected and treated.

The provision of drying the granules at a temperature and, for example, but not necessarily, at a preset time involves the important advantage that humidity is removed from the crystalline structure of the granules, leaving in place thereof a plurality of microscopic interspaces within the structure, which are suitable to allow a liquid to be absorbed to seep deeply through the granule. This transmits to the granules a high ability to absorb liquids.

The provision of statically drying the granules involves the advantage to avoid the further crushing of the granules and the formation of powder during the drying operation.

The provision of cleaning by an air suction the granules after the drying operation involves the important advantage of easily removing paper residues from the granules, which during the drying operation had previously detached from the granules.

This provision involves the important advantage that the granules obtained are well distinct each other and clean, substantially free from powders and fragments made other than of gypsum.

The fact that the obtained granules by the method and the plant according to the invention contain a percentage of at least 80% calcium sulfate allows exploiting the intrinsic inclination of the dihydrate gypsum to remain basically chemically inert when it comes in contact with the liquids to be absorbed.

Such a granular material of dihydrate gypsum, in fact, is capable of absorbing acid or basic liquids, without being altered therefrom.

The granular material obtained through the invention has the advantage to be able to absorb safely fuels dispersed on a surface, by virtue of its physical property to be fireproof, thus not ignitable.

The granular material obtained through the invention involves the further advantage of being stable upon time, therefore to maintain its chemical-physical properties unaltered when stored in a dry environment.

An important advantage of the granular material obtained through the present invention is given by the fact that it is capable of holding, within the granule, the absorbed liquid avoiding to release it through the outer surface thereof. In other words, if such granular material is used for absorbing a liquid, for example an oily liquid, like oil, it holds the oil therein, avoiding to stain objects in contact with the granules.

The provision of treating the granules with a treating means containing a disinfecting agent and an anti-odor product, by virtue of the penetrability of the gypsum by such treating means, involves the important advantage that the granular material obtained allows being used in contact with animals, thus being extremely suitable for use as an animal litter, for example for pets, particularly for cats.

Such a material in fact, allows absorbing a high amount of organic liquid produced by the animals using the litter, while being chemically inert, non-toxic, anti-bacterial, anti-odor.

The provision of coating the granules with a protective layer involves the important advantage of preventing the successive dusting of the same granular material, thereby preventing the release of powder from the granules and preventing the animal using the litter from getting dirty with such powder and spreads it within its zone of action.

A further advantage provided by the invention is that the production of the granular material according to the invention, coming directly from waste material, at the same time avoids the mandatory disposal costs of such waste and avoids the need of using a new starting material, with a consequent huge advantage for the environmental preservation.

Another advantage of the invention is that the above-mentioned granular material, when used as an animal litter, may be disposed of in the city landfills and it does not release percolates hazardous for the environment.

A further advantage of the invention is that, by avoiding further steps of pelletization or compacting, and avoiding to heat the material to high temperatures, the energy used in the manufacturing process is quite reduced and, at the same time, the material obtained has a high absorption power.

To the preferred embodiment of the method and plant described above, those of ordinary skill in the art, with the aim of meeting contingent, specific needs, will be able to make a number of modification, adaptations and replacements of elements with other functionally equivalent ones, without for this departing from the scope of the following claims.

## Claims

1. A method for producing an adsorbing granular material (7) containing at least 70% of dihydrate calcium sulfate from a waste comprising plasterboard elements (3, 4), comprising the steps of:
- selecting (202) a fraction (4) of said plasterboard elements (3, 4) formed by granules (6) having a diameter ranging between a preset minimum value and a preset maximum value;
- drying (203) said fraction (4) or said plasterboard elements (3, 4) at a preset temperature not exceeding 70 °C,
- wherein said minimum preset value substantially ranges between 0.5 µm and 2 mm and said maximum preset value ranges substantially between 4 and 7 mm.

2. The method according to claim 1, wherein the step of drying (203) comprises the steps of:
- depositing a layer of said fraction (4) or of said plasterboard elements (3, 4) onto the bottom of a drying tank (51) defined by a mesh (52) arranged in a substantially horizontal manner, adapted to hold said fraction (4) or said plasterboard elements (3, 4) above it, and defining a heating chamber (54) below it;
- insufflating hot air (53) into said heating chamber (54) so that said hot air (53) passes through the layer of said fraction (4) or of said plasterboard elements (3, 4) so as to dry said fraction (4) or said plasterboard elements (3, 4) at said preset temperature, thus obtaining a dried granular material (7).

3. The method according to one of the preceding claims, comprising a further step of cleaning (204) of said fraction (4) or of said dried granular material (7) comprising the steps of:
- continuously precipitating said fraction (4) or said dried granular material (7) along a tubular well (72);
- creating an air flow running through the tubular well (72) in counter-current with respect to the precipitation direction of the granular material (4, 7) simultaneously with said step of precipitating;
- said air flow blowing away from the fraction (4) or from the dried granular material (7) residual solid particles (8) of materials to be removed, having a specific weight lower than that of the fraction (4) or of the dried granular material (7).

4. The method according to any of the preceding claims, comprising a step of flushing (205) of said dried granular material (7) with a first treatment liquid comprising a disinfecting and antibacterial substance suitable to remain embedded in said dried granular material (7), thus obtaining a treated adsorbing granular material (19),
and/or comprising a step of coating (206) of said dried granular material (7), with a second treatment liquid suitable to form a liquid-permeable protective film, suitable to wrap each single granule of said dried granular material (7), which is adapted to prevent powder from separating from said dried granular material (7), thus obtaining a coated adsorbing granular material (29).

5. The method according to any of the preceding claims, comprising, before the selecting or step of drying, a step of crushing plasterboard panels and sieving the crushed material so as to obtain the plasterboard elements.

6. A production plant (1), from a waste comprising plasterboard elements (3, 4), of a adsorbing granular material (7) containing at least 70% of dihydrate calcium sulfate, comprising:
- sieving means (30) suitable to separate a fraction (4) of said plasterboard elements (3, 4) formed by granules having a diameter ranging between a preset minimum value and a preset maximum value;
- drying means (50) of said fraction (4) or of said plasterboard elements (3, 4) at a preset temperature not exceeding 70 °C,
- wherein said preset minimum value ranges substantially between 0.5 µm and 2 mm, and said maximum value ranges substantially between 4 and 7 mm.

7. The plant according to claim 6, wherein said drying means comprise a containment tank (51) suitable to hold said fraction (4) or said plasterboard elements (3, 4), said drying means comprising a hot air inlet (53) suitable to pass through said fraction (4) or said plasterboard elements (3, 4), thus obtaining said dried adsorbing granular material (7).

8. The plant according to claim 7, wherein said containment tank (51) is superimposed to a lower heating chamber (54) separated from the tank (51) by means of a bottom (52), into said lower chamber (54) being insufflated hot air (53) adapted to pass through said fraction (4) or said plasterboard elements (3, 4), and/or wherein said drier (50) comprises:
- a first distributing screw conveyor (56) rotating about an end thereof along a horizontal plane above the tank (51), adapted to homogeneously distribute said fraction (4) starting from an inlet hopper (58) up to the interior of said tank (51), and
- a second screw conveyor (55) rotating about an end thereof along the bottom (52) of the tank within the tank (51), which is suitable to withdraw with the dried granular material (6) from the bottom of the tank (51) to convey it towards an outlet duct (59).

9. The plant according to claim 8, comprising a cleaning device (70) adapted to remove, from said dried granular material (7), residues (8) of paper and other materials with a specific weight lower than that of the gypsum, said cleaning device (70) comprising a well (72) in which the granular material (7) to be cleaned is precipitated, and a suctioning fan adapted to create a suctioning flow along said well (72) in a direction opposite to that of the granular material, which is adapted to suck said residues (8).

10. An absorbing granule (300, 7, 9, 19, 29) comprising a core (303), which is formed a plasterboard panel waste fragment, containing at least 70% of dihydrate calcium sulfate, said core having a diameter of a value ranging between a preset minimum value of 0.5 µm and a preset maximum value of 7 mm, said core being dried at a preset temperature not exceeding 70 °C.

11. The absorbing granule according to the claim 10, wherein said core (303) comprises a disinfecting and anti-odor substance (301) spread in the volume thereof, and/or wherein said core (303) comprises an outer anti-dust coating (302), said coating being permeable to liquids.

12. A litter for an animal toilet, comprising a plurality of absorbing granules according to claim 10 or 11.

13. Use of a granule according to claim 10 or 11, as a liquid-adsorbing material.
